# EUROPÄISCHE PATENTSCHRIFT

(11) **EP 3 264 547 B1**
(45) Veröffentlichungstag und Bekanntmachung des Hinweises auf die Patenterteilung: **17.02.2021**
(21) Anmeldenummer: 17179130.4
(22) Anmeldetag: 30.06.2017
(51) Int. Cl.: H02G 3/04

(54) **KABELLEITER**
CABLE LADDER
ECHELLE À CÂBLES

(30) Priorität: 01.07.2016 DE 202016103513 U
(43) Veröffentlichungstag der Anmeldung: 03.01.2018
(73) Patentinhaber: Sielski, Kazimierz, 05-480 Karczew (PL)
(72) Erfinder: Sielski, Kazimierz, 05-480 Karczew (PL)
(74) Vertreter: Patentanwälte Olbricht Buchhold Keulertz

(56) Entgegenhaltungen:
- EP-A1- 2 650 990
- WO-A1-2013/133495
- CH-A- 501 863
- FR-A1- 2 226 606

## Beschreibung

Die Erfindung betrifft eine Kabelleiter gemäß dem Oberbegriff von Anspruch 1.

Derartige Kabelleiter dienen zur Führung von Kabeln und Leitungen, die an den Sprossen der Kabelleiter befestigt werden können. Dadurch können die Kabelleiter nicht zur zum horizontalen Führen der Kabel eingesetzt werden, sondern auch beispielsweise vertikal zum Ausgleich von Höhendifferenzen. Die zwischen den Sprossen ausgebildeten Zwischenräume ermöglichen dabei eine gute Luftzirkulation, so dass auch Starkstromleitungen und Kabel mit höherer Wärmeabstrahlung problemlos mit den Kabelleitern geführt werden können.

Die Sprossen sind an den Längsträgern der Kabelleiter üblicherweise mittels Verschweißen oder Vernieten befestigt. Beim Verschweißen besteht bei den häufig verzinkten Sprossen und Längsträgern die Gefahr, diese beim Schweißvorgang zu beschädigen. Eine Beschädigung der Verzinkung könnte dann zu einer vorzeitigen Korrosion führen.

Nietverbindungen benötigen als zusätzliches Element einen Niet, der umgeformt wird und damit eine formschlüssige Befestigung der Sprossen an den Längsträgern ermöglicht. Ein Austausch bzw. ein Versetzen einer Sprosse erfordert dabei jedoch ein aufwendiges Entfernen des alten Niets und dann immer einen neuen Niet, der nur mit entsprechendem Werkzeug eingesetzt werden kann. Dabei muss in der Regel der Niet von beiden Seiten zugänglich sein.

CH 501 863 A5 offenbart beispielsweise eine Kabelbahn für elektrische Leitungen, bei der an senkrechten Stielen Querträger angeordnet sind, welche Traversen zur Auflagerung der elektrischen Leitungen tragen. Die Querträger weisen zwei Paare von Schlitzöffnungen auf. Die Traversen können endseitig mit entsprechend ausgeformten Fortsetzungen in die Schlitzöffnungen eingesetzt und abgewinkelt werden.

In WO 2013/133495 A1 ist ein Kabelträger beschrieben, welcher eine Vielzahl an Querträgern aufweist. Die Querträger weisen endseitig jeweils zwei Ausnehmungen auf. Durch die Ausnehmungen können die Querträger in U-förmige Aufnahmeräume der Längsträger formschlüssig eingesetzt werden. Die U-förmigen Abschnitte können nach dem Einsetzen der Querträger zum Arretieren der Querträger plastisch verformt werden.

Aus FR 2 226 606 A1 geht ein Kabelleiter mit Längsträgern und Querträgern bzw. Sprossen hervor. Die Sprossen weisen jeweils endseitig zwei in Längsrichtung der Sprossen gerichtete Laschen auf, die durch Schlitze in den Längsträgern hindurchragen. Durch Verbiegen der Laschen kann eine feste Verbindung zwischen den Sprossen und den Längsträgern hergestellt werden.

EP 2 650 990 A1 zeigt eine zu FR 2 226 606 A1 analoge Vorrichtung, bei der die Sprossen jeweils endseitig ein Paar aus biegbaren Laschen als Verlängerung der jeweiligen Sprosse aufweisen. Die Laschen können durch korrespondierende Schlitze hindurch gesteckt und anschließend verbogen werden.

Der Erfindung liegt nun die Aufgabe zu Grunde, eine effektive Befestigung der Sprossen an den Längsträgern zu ermöglichen, die mit geringem Aufwand zuverlässig herstellbar ist.

Diese Aufgabe wird durch eine Kabelleiter mit den Merkmalen des Anspruchs 1 gelöst. Vorteilhafte Ausgestaltungen sind Gegenstand der Unteransprüche.

Bei einem Kabelleiter mit zwei in einem Abstand zueinander angeordneten Längsträgern, die durch eine Vielzahl von Sprossen miteinander verbunden sind, wobei die Sprossen an ihren Enden über umgeformte Haltelaschen formschlüssig an den Längsträgern befestigt sind, ist erfindungsgemäß vorgesehen, dass an den Enden der Sprossen jeweils zwei zueinander parallele Schlitze ausgebildet sind, die in einer Sprossenlängsrichtung zueinander versetzt sind, wobei je ein Endbereich einer Haltelasche durch einen der Schlitze geführt ist und die Endbereiche des Haltelaschen aufeinander zu gebogen sind, wobei sich die umgebogenen Endbereiche in Sprossenlängsrichtung überlappen und insbesondere bündig nebeneinander liegen.

Durch einfaches Umbiegen der Endbereiche der Haltelaschen ist dabei ein formschlüssiger Halt erzielbar. Dafür ist kein spezielles Werkzeug erforderlich. Darüber hinaus ist die Umformung reversibel, so dass eine Haltelasche nach einem Austausch oder einem Versetzen einer Sprosse auch wiederholt eingesetzt werden kann. Die Haltelaschen können dadurch paarweise durch die Schlitze geführt werden können und so hohe Kräfte aufnehmen. Ferner verhindern sie eine Verdrehung der Sprossen gegenüber den Längsträgern. Dabei können durch einen Versatz der Schlitze zueinander die Endbereiche der Haltelaschen nebeneinander zu liegen kommen und tragen so nur geringfügig auf. Ferner steht den Endbereichen dadurch relativ viel Raum zur Verfügung.

In einer bevorzugten Ausgestaltung sind die Haltelaschen einstückig mit den Längsträgern ausgebildet. Dafür sind diese beispielsweise aus den Längsträgern ausgestanzt, wobei sie in einem Biegebereich mit den Längsträgern stoffschlüssig verbunden bleiben und zunächst nach oben gebogen und durch Schlitze in den Enden der Sprossen geführt werden. Anschließend werden die freien Endbereiche der Haltelaschen umgebogen und die Sprossen so formschlüssig an den Längsträgern befestigt. Eine einstückige Ausbildung der Haltelaschen mit den Längsträgern hat den Vorteil, dass keine einzelnen zusätzlichen Bauteile erforderlich sind, die verloren werden können. Zusätzlich wird eine sehr zuverlässige Verbindung erhalten.

Bevorzugterweise verringert sich eine Breite der Endbereiche, wobei ein dem anderen Endbereich benachbarter Rand schräg zu einer Erstreckungsrichtung der Haltelaschen verläuft. Die Breite der nebeneinanderliegenden Endbereiche wird dadurch gering gehalten.

In einer bevorzugten Ausgestaltung weisen die Längsträger einen L-förmigen Querschnitt mit aufeinander zu gerichteten Lastschenkeln auf, auf denen die Enden der Sprossen angeordnet sind. Über die Lastschenkel erfolgt dann die wesentliche Kraftübertragung von den Sprossen auf die Längsträger. Darüber hinaus stellen die Lastschenkel eine ausreichende Fläche dar, aus der die Haltelaschen ausgeformt werden können. Die Haltelaschen sind dann also in den Lastschenkeln ausgebildet.

Insbesondere können zwei parallelen Reihen an Öffnungen in einem Lastschenkel nebeneinander ausgebildet sein. An diesen kann beispielsweise eine Befestigung von Zusatzelementen oder von Leitungen erfolgen. Ferner dienen sie zur Gewichtsreduktion.

Vorzugsweise weisen die Sprossen einen U- oder C-förmigen Querschnitt mit einem Boden und zwei Seitenwänden auf, wobei die Schlitze im Boden ausgebildet sind. Die Sprossen können so mit geringer Wandstärke und dennoch relativ stabil gefertigt werden. Gegebenenfalls können zwischen den Seitenwänden dann auch Befestigungselemente aufgenommen werden, mit denen die Kabel an den Sprossen befestigbar sind.

In einer bevorzugten Weiterbildung sind die Seitenwände an einer vom Boden abgewandten Oberkante um 80 - 210° umgebogen. Im Bereich der Oberkante wird so eine relativ große Auflagefläche ohne scharfe Kanten für die Leitungen erhalten.

Die Seitenwände können dabei aufeinander zu oder voneinander weg gebogen werden.

Werden die Seitenwände aufeinander zu gebogen, ist ein Winkel im Bereich der Oberkante zwischen 80 und 90° vorteilhaft. Dadurch wird innerhalb der Sprossen ein Raum ausgebildet, in dem beispielsweise Befestigungselemente zum Befestigen der Leitungen untergebracht werden können. Wenn die Seitenwände voneinander weg und um mehr als 150 ° umgebogen werden, werden die Seitenwände sozusagen doppelwandig ausgebildet. Damit werden die Sprossen relativ breit und stabil.

Insbesondere kann vorgesehen sein, dass sich ein umgebogener Rand der Seitenwände an den Längsträgern abstützt. Damit ergibt sich eine verbesserte Stabilität.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Eine Kabelleiter in räumlicher Darstellung,
- Fig. 2: die Kabelleiter in Draufsicht,
- Fig. 3: einen Längsträger in Draufsicht,
- Fig. 4: den Längsträger in Seitenansicht,
- Fig. 5: den Längsträger in Frontansicht,
- Fig. 6: eine Sprosse in Bodenansicht,
- Fig. 7: die Sprosse nach Fig. 6 in Frontansicht,
- Fig. 8: eine alternative Ausgestaltung einer Sprosse in Bodenansicht und
- Fig. 9: Die Sprosse nach Fig. 8 in Frontansicht.

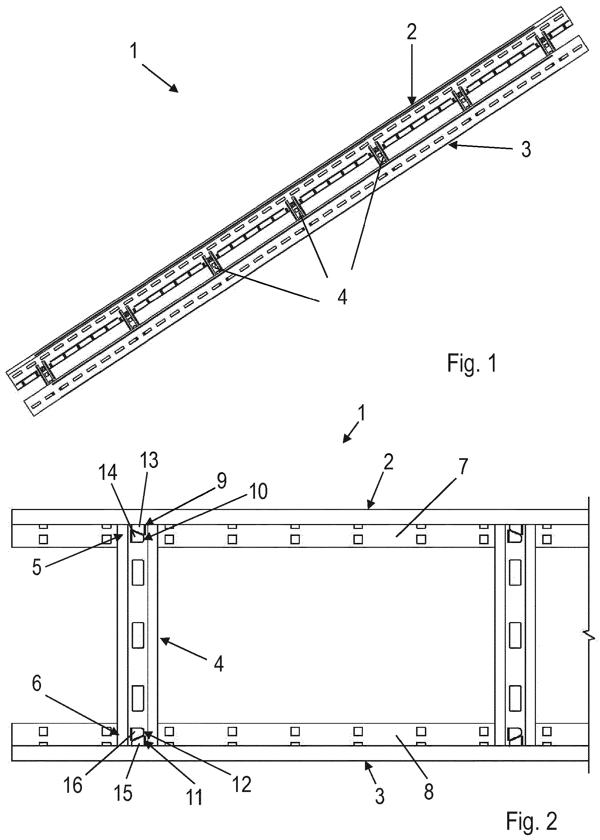

In Fig. 1 ist eine Kabelleiter 1 mit zwei in einer Längsrichtung verlaufenden Längsträgern 2, 3 dargestellt, die über Sprossen 4 miteinander verbunden sind. Die Sprossen 4 erstrecken sich dabei rechtwinklig zu den Längsträgern 2, 3. Dabei sind in den Längsträgern 2, 3 zur Gewichtsreduzierung eine Vielzahl von Ausnehmungen ausgebildet.

Wie aus Fig. 2 zu entnehmen ist, sind die Sprossen 4 mit ihren Enden 5, 6 an den Längsträgern 2, 3 befestigt, und zwar an Lastschenkeln 7, 8 der Längsträger 2, 3, die einen im Wesentlichen L-förmigen Querschnitt aufweisen. An jedem Ende 5, 6 erfolgt dabei die Befestigung über ein Paar Haltelaschen 9, 10, 11, 12, deren umgebogene Endbereiche 13, 14, 15, 16 auf einer Oberseite der Sprossen 4 aufliegen. Die Haltelaschen 9, 10, 11, 12 sorgen so für eine formschlüssige, stabile Verbindung der Sprossen 4 mit den Längsträgern 2, 3.

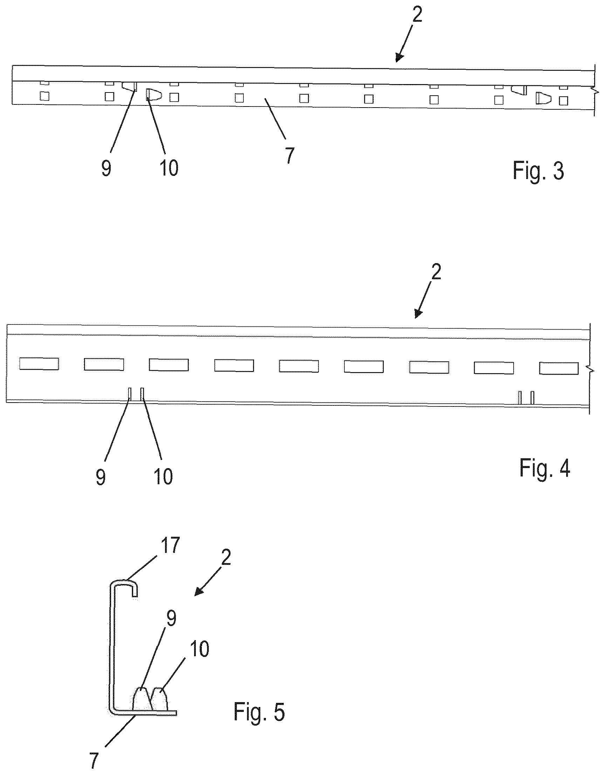

In Fig. 3 ist ein Längsträger 2, 3 in Draufsicht dargestellt. Die Haltelaschen 9, 10 sind aus dem Lastschenkel 7, 8 ausgestanzt und noch über einen Biegebereich stoffschlüssig mit dem Längsträger 2, 3 verbunden. Dabei sind die Haltelaschen 9, 10 aus der Zeichenebene heraus gebogen und zeigen somit im Wesentlichen senkrecht vom Lastschenkel nach oben. Dies wird insbesondere aus Fig. 4 ersichtlich.

Fig. 5 zeigt nun eine Frontansicht eines Längsträgers 2, 3 mit nach oben gerichteten Haltelaschen 9, 10. Der Längsträger weist einen L-förmigen Querschnitt auf mit einem um etwa 180° umgerollten Rand 17, der zum einen die Stabilität der Kabelleiter 1 erhöht und zum anderen eine Verletzungsgefahr verringert. Gut zu erkennen sind dabei die aus dem Lastschenkel heraus gebogenen Haltelaschen 9, 10.

Zu erkennen ist auch, dass jeweils zwei Haltelaschen 9, 10, 11, 12 ein Paar bilden, dass jeweils zwei in Längsrichtung und quer zur Längsrichtung der Längsträger 2, 3 zueinander versetzte Haltelaschen umfasst. Dabei kann vorgesehen sein, dass sich wie in den Fig. 5 dargestellt, eine Breite der Haltelaschen 9, 10 insbesondere in deren Endbereichen 13, 14, 15, 16 verringert. Durch diese Ausgestaltung können die Endbereiche nach dem Durchführen durch in den Sprossen ausgebildete Schlitze aufeinander zu gebogen und nebeneinander angeordnet werden. Der umgeformte Zustand mit bündig nebeneinander angeordneten Endbereichen 13, 14, 15, 16 ist beispielsweise in Fig. 2 dargestellt.

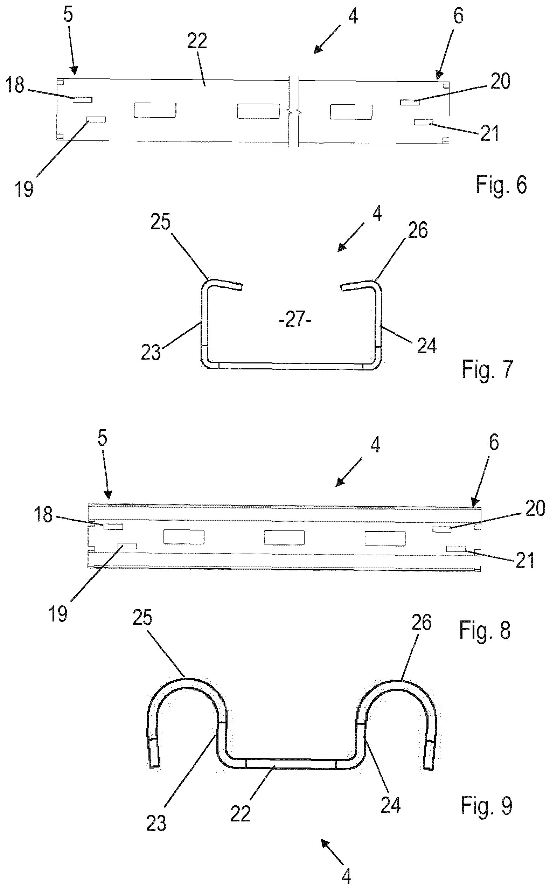

In Fig. 6 ist eine Unteransicht einer Sprosse 4 einer ersten Ausführungsform dargestellt, die einen im Wesentlichen C-förmigen Querschnitt aufweist, wie es Fig. 7 zeigt. Die Sprosse 4 weist an ihren Enden 5, 6 jeweils zwei Schlitze 18, 19, 20, 21 auf, durch die die Haltelaschen 9, 10, 11, 12 geführt werden können.

Die zwei jeweils an einem Ende ausgebildeten Schlitze 18, 19, 20, 21 sind dabei zueinander in Sprossenlängsrichtung und in Sprossenquerrichtung derart versetzt, dass die Haltelaschen so umgebogen werden können, dass deren Endbereiche 13, 14, 15, 16 nebeneinander auf einer Oberseite eines Bodens 22 der Sprosse 4 zu liegen kommen.

Die Sprosse 4 weist, wie in Fig. 7 dargestellt, zwei sich senkrecht zum Boden 22 erstreckende Seitenwände 23, 24 auf. An Oberkanten 25, 26 sind die Seitenwände 23, 24 dabei um etwa 100° aufeinander zu gebogen. Dadurch ergibt sich ein Innenraum 17 zur Aufnahme von Befestigungsmitteln für Leitungen und gleichzeitig auf den Oberkanten eine relativ großflächige Auflagefläche für die Leitungen.

In Fig. 8 ist eine weitere Sprosse 4 dargestellt, bei der die Seitenwände 23, 24 an den Oberkanten 25, 26 um etwa 190°umgebogen sind. Dadurch ergeben sich sozusagen doppelwandige Seitenwände, deren Ränder 28, 29 sich auf den Lastschenkeln 7, 8 der Längsträger 2, 3 abstützen können. Mit einer derartigen Ausgestaltung der Sprossen 4 ergibt sich somit eine besonders hohe Stabilität.

Die Erfindung ist nicht auf eine der vorbeschriebenen Ausführungsformen beschränkt, sondern in vielfältiger Weise abwandelbar. So könnten die Haltelaschen beispielsweise nicht einstückig mit den Längsträgern, sondern einstückig mit den Sprossen ausgebildet sein. In jedem Fall wären die Haltelaschen dann als aus den Sprossen bzw. aus den Längsträgern herausgebogene Laschen ausgebildet. Bei Haltelaschen in Form von in den Sprossen ausgeformten Laschen müssten in den Längsträgern bzw. den Lastschenkeln dann entsprechende Schlitze vorgesehen werden, durch die die Haltelaschen geführt und anschließend umgebogen werden können.

Ein Querschnitt der Längsträger kann auch von der gezeigten L-Form abweichen. Ebenso kann auch ein Querschnitt der Sprossen anders als dargestellt gestaltet werden.

Ein bevorzugtes Material für die Kabelleiter ist verzinktes Stahlblech. Es sind aber auch andere Materialien einsetzbar, wobei sogar für die Längsträger und die Sprossen unterschiedliche Materialien verwendet werden können.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Kabelleiter
- 2: Längsträger
- 3: Längsträger
- 4: Sprosse
- 5: Ende
- 6: Ende
- 7: Lastschenkel
- 8: Lastschenkel
- 9: Haltelasche
- 10: Haltelasche
- 11: Haltelasche
- 12: Haltelasche
- 13: Endbereich
- 14: Endbereich
- 15: Endbereich
- 16: Endbereich
- 17: Rand
- 18: Schlitz
- 19: Schlitz
- 20: Schlitz
- 21: Schlitz
- 22: Boden
- 23: Seitenwand
- 24: Seitenwand
- 25: Oberkante
- 26: Oberkante
- 27: Innenraum
- 28: Rand
- 29: Rand

## Patentansprüche

1. Kabelleiter (1) mit zwei in einem Abstand zueinander angeordneten Längsträgern (2, 3), die durch eine Vielzahl von Sprossen (4) miteinander verbunden sind, wobei die Sprossen (4) an ihren Enden (5, 6) über umgeformte Haltelaschen (9, 10, 11, 12) formschlüssig an den Längsträgern (2, 3) befestigt sind, **dadurch gekennzeichnet, dass** an den Enden (5, 6) der Sprossen (4) jeweils zwei zueinander parallele Schlitze (18, 19, 20, 21) ausgebildet sind, die in einer Sprossenlängsrichtung zueinander versetzt sind, wobei je ein Endbereich (13, 14, 15, 16) einer Haltelasche (9, 10, 11, 12) durch einen der Schlitze (18, 19, 20, 21) geführt ist und die Endbereiche (13, 14, 15, 16) des Haltelaschen (9, 10, 11, 12) aufeinander zu gebogen sind, wobei sich die umgebogenen Endbereiche (13, 14, 15, 16) in Sprossenlängsrichtung überlappen und insbesondere bündig nebeneinander liegen.

2. Kabelleiter nach Anspruch 1, **dadurch gekennzeichnet, dass** die Haltelaschen (9, 10, 11, 12) einstückig mit den Längsträgern (2, 3) oder den Sprossen (4) ausgebildet sind.

3. Kabelleiter nach Anspruch 1, **dadurch gekennzeichnet, dass** sich eine Breite der Endbereiche (13, 14, 15, 16) verringert, wobei ein dem anderen Endbereich (13, 14, 15, 16) benachbarter Rand schräg zu einer Erstreckungsrichtung der Haltelasche (9, 10, 11, 12) verläuft.

4. Kabelleiter nach einem der vorhergehenden Ansprüche, **dadurch gekennzeichnet, dass** die Längsträger (2, 3) einen L-förmigen Querschnitt mit aufeinander zu gerichteten Lastschenkeln (7, 8) aufweisen, auf denen die Enden (5, 6) der Sprossen (4) angeordnet sind.

5. Kabelleiter nach Anspruch 4, **dadurch gekennzeichnet, dass** in den Lastschenkeln (7, 8) insbesondere zwei parallele Reihen an Öffnungen nebeneinander ausgebildet sind.

6. Kabelleiter nach einem der vorhergehenden Ansprüche, **dadurch gekennzeichnet, dass** die Sprossen (4) einen U- oder C-förmigen Querschnitt mit einem Boden (22) und zwei Seitenwänden (23, 24) aufweisen, wobei die Schlitze (18, 19, 20, 21) im Boden (22) ausgebildet sind.

7. Kabelleiter nach Anspruch 6, **dadurch gekennzeichnet, dass** die Seitenwände (23, 24) an einer vom Boden (22) abgewandten Oberkante (25, 26) um 70 - 210 ° umgebogen sind.

8. Kabelleiter nach Anspruch 7, **dadurch gekennzeichnet, dass** sich ein umgebogener Rand (28, 29) der Seitenwände (23, 24) an den Längsträgern (2, 3) abstützt.

## Claims

1. Cable ladder (1) having two longitudinal members (2, 3) which are arranged at a distance from one another and are connected to one another by a multiplicity of rungs (4), the rungs (4) being fastened in a form-fitting manner at their ends (5, 6) to the longitudinal members (2, 3) via shaped retaining lugs (9, 10, 11, 12), **characterized in that** two mutually parallel slots (18, 19, 20, 21) are formed at each end (5, 6) of the rungs (4), the slots (18, 19, 20, 21) being offset with respect to one another in a longitudinal direction of the rungs, wherein one end region (13, 14, 15, 16) of each retaining lug (9, 10, 11, 12) is guided through one of the slots (18, 19, 20, 21) and the end regions (13, 14, 15, 16) of the retaining lugs (9, 10, 11, 12) are bent towards one another, the bent-over end regions (13, 14, 15, 16) overlapping in the longitudinal direction of the rungs and, in particular, lying flush next to one another.

2. Cable ladder according to claim 1, **characterized in that** the retaining lugs (9, 10, 11, 12) are formed integrally with the longitudinal members (2, 3) or the rungs (4).

3. Cable ladder according to claim 1, **characterized in that** a width of the end regions (13, 14, 15, 16) is reduced, wherein an edge being adjacent to the other end region (13, 14, 15, 16) extends obliquely to a direction of extension of the retaining lug (9, 10, 11, 12).

4. Cable ladder according to one of the preceding claims, **characterized in that** the longitudinal members (2, 3) have an L-shaped cross-section with load legs (7, 8) directed towards each other, on which the ends (5, 6) of the rungs (4) are arranged.

5. Cable ladder according to claim 4, **characterized in that** in the load legs (7, 8) in particular two parallel rows of openings are formed side by side.

6. Cable ladder according to one of the preceding claims, **characterized in that** the rungs (4) have a U- or C-shaped cross-section with a bottom (22) and two side walls (23, 24), the slots (18, 19, 20, 21) being formed in the bottom (22).

7. Cable ladder according to claim 6, **characterized in that** the side walls (23, 24) are bent over by 70 - 210° at an upper edge (25, 26) facing away from the bottom (22).

8. Cable ladder according to claim 7, **characterized in that** a bent-over edge (28, 29) of the side walls (23, 24) is supported on the longitudinal members (2, 3).

## Revendications

1. Echelle à câbles (1) avec deux supports longitudinaux (2, 3) disposés à distance l'un de l'autre, qui sont reliés entre eux par une pluralité d'échelons (4), les échelons (4) étant fixés par engagement positif à leurs extrémités (5, 6) aux supports longitudinaux (2, 3) par l'intermédiaire d'ergots de retenue (9, 10, 11, 12) formés, **caractérisée en ce que** deux fissures (18, 19, 20, 21) parallèles entre elles sont formées respectivement aux extrémités (5, 6) des échelons (4), les fissures (18, 19, 20, 21) étant décalées l'une par rapport à l'autre dans la direction longitudinale des échelons, une zone d'extrémité (13, 14, 15, 16) d'un ergot de retenue (9, 10, 11, 12) étant formée respectivement à travers l'une des fissures (18, 19, 20, 21), les zones d'extrémité (13, 14, 15, 16) d'ergots de retenue (9, 10, 11, 12) étant repliées les unes vers les autres, les zones d'extrémité repliées (13, 14, 15, 16) se chevauchant dans la direction longitudinale des barreaux et étant notamment juxtaposées à fleur.

2. Echelle à câbles selon la revendication 1, **caractérisée en ce que** les ergots de retenue (9, 10, 11, 12) sont formées d'un seul tenant avec les supports longitudinaux (2, 3) ou les échelons (4).

3. Echelle à câbles selon la revendication 1, **caractérisée en ce qu'**une largeur des zones d'extrémité (13, 14, 15, 16) est réduite, un bord adjacent à l'autre zone d'extrémité (13, 14, 15, 16) s'étendant obliquement par rapport à une direction d'extension d'ergot de retenue (9, 10, 11, 12).

4. Echelle à câbles selon l'une des revendications précédentes, **caractérisée en ce que** les supports longitudinaux (2, 3) ont une section transversale en forme de L avec des jambes de charge (7, 8) dirigées l'une vers l'autre, sur lesquelles sont disposées les extrémités (5, 6) des échelons (4).

5. Echelle à câbles selon la revendication 4, **caractérisée en ce qu'**en particulier deux rangées parallèles d'ouvertures sont formées côte à côte dans les jambes de charge (7, 8).

6. Echelle à câbles selon l'une des revendications précédentes, **caractérisée en ce que** les échelons (4) présentent une section transversale en forme de U ou de C avec un fond (22) et deux parois latérales (23, 24), les fissures (18, 19, 20, 21) étant formées dans le fond (22).

7. Echelle à câbles selon la revendication 6, **caractérisée en ce que** les parois latérales (23, 24) sont repliées de 70 à 210° sur un bord supérieur (25, 26) opposé au fond (22).

8. Echelle à câbles selon la revendication 7, **caractérisée en ce qu'**un bord plié (28, 29) des parois latérales (23, 24) s'appuie sur les supports longitudinaux (2, 3).
